# EUROPEAN PATENT SPECIFICATION

(11) **EP 3 976 946 B1**
(45) Date of publication and mention of the grant of the patent: **20.09.2023**
(21) Application number: 20731563.1
(22) Date of filing: 21.05.2020
(51) Int. Cl.: F01N 3/035

(54) **EXHAUST GAS CATALYST SYSTEM**
ABGASKATALYSATORSYSTEM
SYSTÈME CATALYSEUR DES GAZ D'ÉCHAPPEMENT

(30) Priority: 03.06.2019 IT 201900007863
(43) Date of publication of application: 06.04.2022
(73) Proprietor: Same Deutz-Fahr Italia S.p.A., 24047 Treviglio (Bergamo) (IT)
(72) Inventor: MATTEI, Manlio, 24047 Treviglio, Bergamo (IT); CRIPPA, Luca, 24047 Treviglio, Bergamo (IT)
(74) Representative: Gamba, Alessandro
(86) International application number: PCT/IB2020/054834
(87) International publication number: WO 2020/245689

(56) References cited:
- EP-A1- 1 436 490
- EP-A1- 1 644 621
- EP-A1- 3 146 174
- DE-A1- 19 955 013
- US-A1- 2006 008 397

## Description

The present invention relates to an exhaust gas catalyst for a vehicle. Furthermore, the present invention also relates to a vehicle comprising said exhaust gas catalyst system and to the method for treating the exhaust gases produced by an internal combustion engine group of a vehicle that uses said exhaust gas catalyst system.

In particular, in the following description, the term "vehicle" means a generic motor vehicle, while the term "tractor" means both agricultural tractors and, more generally, earthmoving machines that derive from agricultural tractors, or agricultural machines, for example harvesting machines.

In accordance with the present invention, the exhaust gas catalyst system may form part of a plant for treating exhaust gases with the aim of preventing the vehicle from producing pollutants and dispersing them into the environment. In particular, the exhaust gas treatment plants are fluidically connected to the internal combustion engine group, preferably a diesel-powered internal combustion engine group, and filter the fine dusts and/or reduce the nitrogen oxides (NOx) present in the exhaust gas produced by said internal combustion engine group.

Embodiments of these plants in which the exhaust gases are subjected to one or more operations for filtering and/or reducing the nitrogen oxides (NOx) emitted from the combustion chamber of the engine group are already known. In particular, the known plants comprise at least one filtration system that is suitable for removing the particles of fine dusts and at least one catalyst system that is suitable for reducing the nitrogen oxides NOx.

In accordance with the known embodiments, the particulate filtration systems have limited storage capacity and require frequent regeneration operations by means of the oxidation thereof. For example, solutions are known in which the filtration system, for example the DPF system, has to be cleaned intermittently or continuously to avoid extreme clogging that may damage the engine group and/or the filtering system itself.

In particular, the material trapped in the filtering system, that is the trapped fine dusts, largely consists of carbon particles together with a number of absorbed hydrocarbons. This unwanted material is removable by reacting it with oxygen (O2) or with nitrogen dioxide (NO2). In particular, in the prior art, the solutions that make use of nitrogen dioxide have become widespread, since the chemical reactions within them take place at controlled temperatures in most diesel exhausts.

In the above-mentioned context, solutions for plants for treating exhaust gases are likewise known, which implement a continuously regenerating system, for example the CRT^{®} (Continuously Regenerating Trap) system, in which at least one oxidation catalyst group is provided upstream of the DPF system that is suitable for generating the NO2 necessary for keeping the filtration system clean. Up to a certain fine dust threshold value, the NO2-based oxidation reaction keeps the soot around its equilibrium point by oxidizing all the fine dusts produced by the engine group. If the equilibrium point of the particulate may not be reached, standstill/service regeneration is carried out.

As soon as the combustion operations of the engine group have finished, a small quantity of fuel is injected into the combustion chamber (delayed injection of the main injection system of the engine) such that hydrocarbons are created and burned in the catalyst substrate, causing an increase in the temperature of the exhaust gases that optimizes the operations inside the filtration system (i.e. in the DPF system).

Within the automotive sector (and also within the tractor and, in particular, the specialty tractor sector), in addition to the above framework, in particular the problem of managing the space in the vehicle has existed for some time. In particular, for some time there has been a need for the components and the systems of the vehicle to be as compact as possible and to have the smallest possible overall dimensions.

The plant for treating exhaust gases, and in particular the exhaust gas catalyst system thereof, is no exception to these problems and needs: solutions that are as compact as possible are well known in the art; in particular, solutions for exhaust gas catalyst systems that comprise fluidic paths that are suitably shaped to contain catalyst and/or filter groups in a desired position and to have the most compact dimensions possible are well known; in more detail, solutions for exhaust gas catalyst systems are known in which ducts and/or chambers are provided that are suitably shaped and fluidically connected so as to have the smallest possible overall dimensions, for example by being positioned one inside the other. Solution of known exhaust gas catalyst system are disclosed in documents US2006/008397A1, EP3146174A1, DE19955013A1, EP1436490A1 and EP1644621A1.

The object of the present invention is to provide an exhaust gas catalyst system solution that meets the above needs both in full and in an extremely efficient manner. In particular, the object of the present invention is to provide an exhaust gas catalyst system that has the most compact dimensions possible and at the same time allows for better management of the temperatures of the exhaust gases in order to make the operations of reducing the pollutant emissions as efficient as possible. This aim is achieved by an exhaust gas catalyst system as per claim 1. In addition, this aim is achieved by a vehicle comprising said exhaust gas catalyst system as per claim 4. Furthermore, this aim is achieved by a method for treating exhaust gases that is carried out by means of said exhaust gas catalyst system as per claim 6. The claims dependent on these claims describe additional preferred embodiments.

The features and the advantages of the system, of the vehicle and of the method of the present invention will become clear from the following description, given by way of non-limiting example, in accordance with the attached drawings, in which:

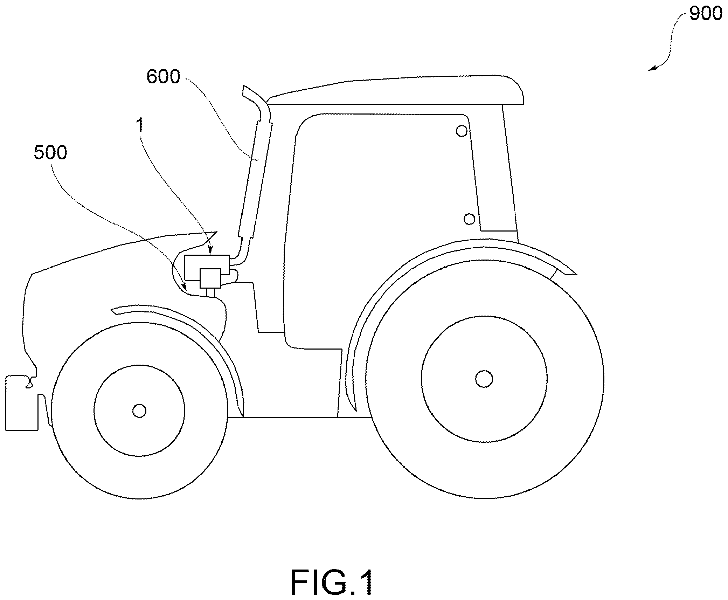

- Fig. 1 is a schematic view of a vehicle, in particular of a tractor, as per the present invention according to a preferred embodiment;

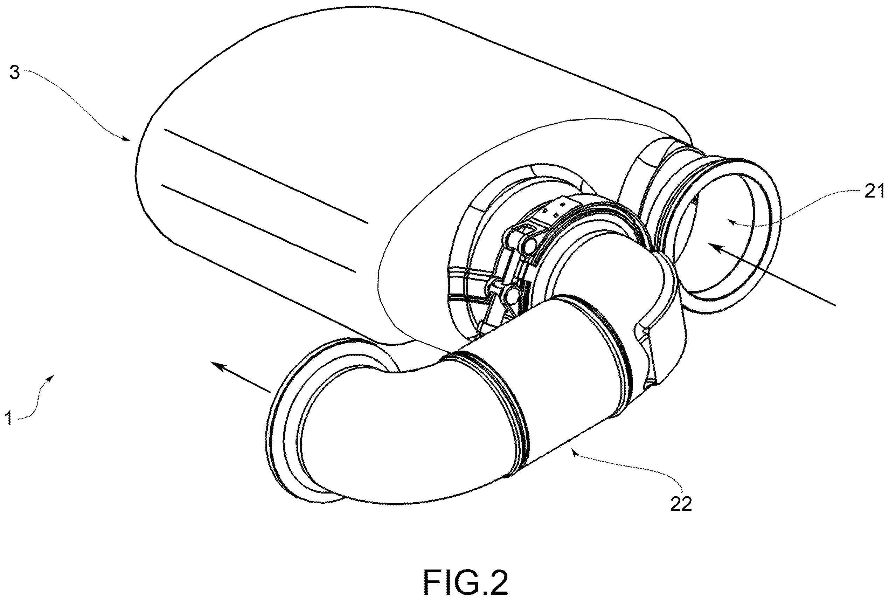

- Fig. 2 is a perspective view, according to a preferred embodiment, of an exhaust gas catalyst system in accordance with the present invention;

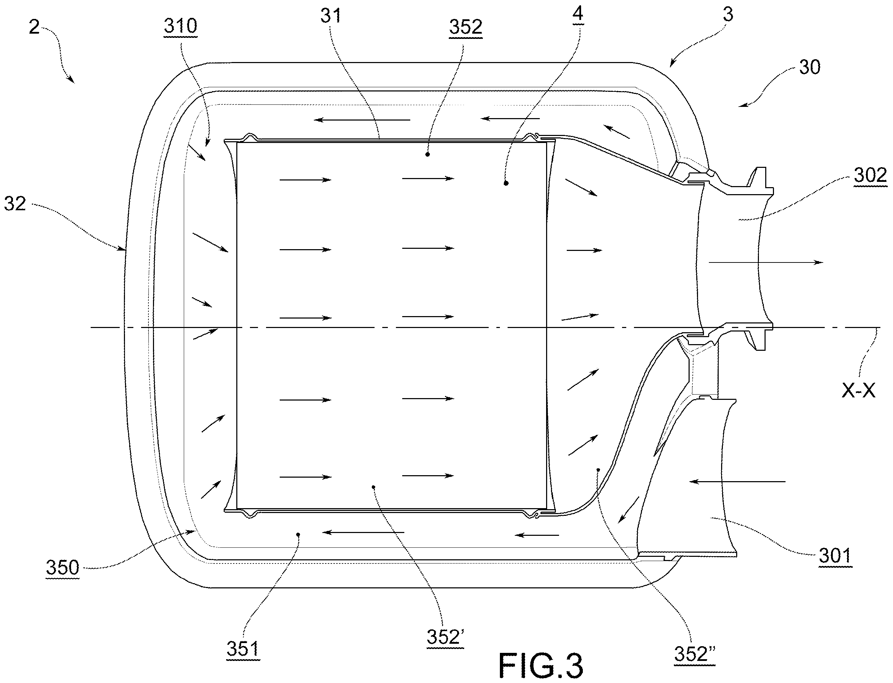

- Fig. 3 is a longitudinal sectional view of the exhaust gas catalyst system shown in Fig. 2;
- Fig. 4 is a graph showing the temperature of the exhaust gases inside the exhaust gas catalyst system of the present invention and inside an exhaust gas catalyst system as per a prior art embodiment.

In accordance with the attached drawings, 1 indicates, as a whole, an exhaust gas catalyst system according to the present invention. As described extensively in the following, the exhaust gas catalyst system 1 of the present invention is preferably a "DOC" ("Diesel Oxidation Catalyst") system.

In addition, in accordance with the attached drawings, 900 indicates a vehicle according to the present invention (shown as a tractor in the drawings). Numeral 500 indicates an internal combustion engine group of said vehicle 900. The internal combustion engine group 500 is preferably a diesel-powered internal combustion engine group. The present invention is preferably not limited to specific embodiments of said internal combustion engine group 500.

Furthermore, numeral 600 indicates a DPF (acronym of "Diesel Particulate Filter") system for "filtering" the fine dusts that is, in turn, comprised in the vehicle 900. In particular, a filtering system 600 means a system that is suitable for physical filtration or for performing a chemical reduction operation in order to prevent the dispersion of the fine dusts into the environment.

According to the present invention, the exhaust gas catalyst system 1 is suitable to carry out treatment operations, that is for filtering and/or reducing the nitrogen oxides in the exhaust gases produced by said internal combustion engine group 500. In particular, the exhaust gas catalyst system 1 is in fact fluidically connected to the internal combustion engine 500 upstream and to the environment (in particular to the "filtering" system 600) downstream.

As mentioned, the present invention also relates to a vehicle 900 comprising an internal combustion engine group 500, a filtering system 600 and an exhaust gas catalyst system 1 as per that described below. The exhaust gas treatment system of the vehicle 1 is fluidically positioned in said vehicle 900 between the internal combustion engine group 500 and the filtering system 600.

Said vehicle is preferably a tractor or a specialty tractor.

In accordance with the present invention, the exhaust gas catalyst system 1 comprises an inlet duct 21 fluidically connectable to the internal combustion engine group 500 in order to receive the exhaust gases emitted.

Furthermore, in accordance with the present invention, the exhaust gas catalyst system 1 comprises an outlet duct 22 fluidically connectable to the environment in order to emit the exhaust gases post-treatment. The outlet duct 22 is therefore preferably fluidically connectable to the filtering system 600 arranged in the vehicle 900.

The shape of the inlet duct 21 and the outlet duct 22 and their arrangement in the vehicle are preferably not limiting for the purposes of the present invention.

According to the present invention, the exhaust gas catalyst system 1 comprises a main body 3 that is suitably fluidically connected such that the gas catalyzing operations are carried out inside said body.

The main body 3 extends lengthwise along a main axis X-X between a top wall 30 and a bottom wall 32 that are axially spaced apart.

According to the present invention, the top wall 30 comprises at least one inlet opening 301 that is fluidically connected to the inlet duct 21; via said inlet opening 301, the gases produced by the internal combustion engine group 500 therefore have access inside of the main body 3.

Furthermore, according to the present invention, the top wall 30 comprises at least one outlet opening 302 that is fluidically connected to the outlet duct 22; via said outlet opening 302, the gases are therefore evacuated towards the environment (towards the filtration system 600) following the treatment operations that take place in the main body 3.

In accordance with the present invention, the main body 3 is hollow and internally defines a gas treatment chamber 350.

In particular, said gas treatment chamber 350 comprises a first chamber and a second chamber, one radially extending distally with respect to said main axis X-X and the other extending along the main axis X-X, respectively.

The annular chamber 351 radially extends distally from the main axis X-X. The central chamber 352 instead extends on the main axis X-X. In other words, the two chambers are positioned one inside the other. In particular, the central chamber 352 is surrounded by the annular chamber 351 either fully or in part.

Said annular chamber 351 is fluidically connected to the inlet opening 301. The annular chamber 351 is therefore the first chamber inside the main body 3 inside which the exhaust gases arriving from the engine group 500 flow.

Said central chamber 352 is fluidically connected to the outlet opening 302. The central chamber 352 is therefore the second chamber inside the main body 3 inside which the exhaust gases flow after they have passed through the annular chamber 351 (or the first chamber). According to the present invention, the central chamber 352 and the annular chamber 351 are in fact separated from one another by a separation wall 31.

Said separation wall 31 preferably extends lengthwise in parallel with the axis X-X from the top wall 30 towards the bottom wall 32.

According to the present invention, the annular chamber 351 and the central chamber 352 are in fact fluidically connected in a region that is proximal to the bottom wall 32.

According to a preferred embodiment, the separation wall 31 comprises outflow openings 310 near the bottom wall 32, via which openings the gases flow from the annular chamber 351 to the central chamber 352.

According to a preferred variant, the separation wall 31 axially ends in a region that is proximal to the bottom wall 32, thereby defining an outflow opening 310 through which the gases flow from the annular chamber 351 to the central chamber 352.

In accordance with a preferred embodiment, the bottom wall 32 is shaped so as to facilitate the flow of the gases from the annular chamber 351 to the central chamber 352.

The bottom wall 32 is preferably curved or shaped so as to direct the gases from the annular chamber 351 to the central chamber 352.

Therefore, in accordance with the present invention, the first chamber and the second chamber are fluidically connected such that the exhaust gases flow in the two chambers in opposite directions along the main axis X-X. In the annular chamber 351, the exhaust gases flow from the top wall 30 towards the bottom wall 32, while, in the central chamber 352, the exhaust gases flow from the bottom wall 32 towards the top wall 30.

In accordance with the present invention, the exhaust gas catalyst system 1 also comprises a catalyst substrate 4. According to the present invention, when the exhaust gases pass through the catalyst substrate 4, said substrate carries out a filtration action and, especially, an oxidation action on the particulate.

In accordance with the present invention, the catalyst substrate 4 is housed in said second chamber 352 (that is in said central chamber). That is to say that the catalyst substrate 4 is the last component that the flow of exhaust gas passes through before reaching and passing through the outlet opening 302.

In accordance with the present invention, the operations on the exhaust gases that result in an increase in the temperature (of said gases) are therefore the last to be carried out before said gases leave the main body 3. Therefore, exhaust gases that are treated by the catalyst substrate 4 and have a "high temperature" preferably leave via the outlet opening 302.

According to the invention, the central chamber 352 reaches higher temperatures than the annular chamber 351 surrounding it. In accordance with the present invention, the increase in the temperature in the central chamber 352 also causes the annular chamber 351 to heat up. The gases flowing out into the annular chamber 351 are therefore subjected to a pre-heating step.

In accordance with a preferred embodiment, the central chamber 352 comprises a catalyzing region 352' that is axially proximal to the bottom wall 32 and a bottleneck 352".

The bottleneck 352" preferably prevents the gases from leaving, thereby prolonging the time it takes for said gases to pass through the catalyzing region 352'.

Said bottleneck 362" is preferably arranged between the catalyzing region 352' and the outlet opening 302.

According to the invention, the annular chamber 351 delimits a fluidic conduit for the flow of exhaust gases, in which the gases flow undisturbed but are subjected to the higher temperatures produced in the central chamber 352. The annular chamber is, to all intents and purposes, a "preheating" chamber.

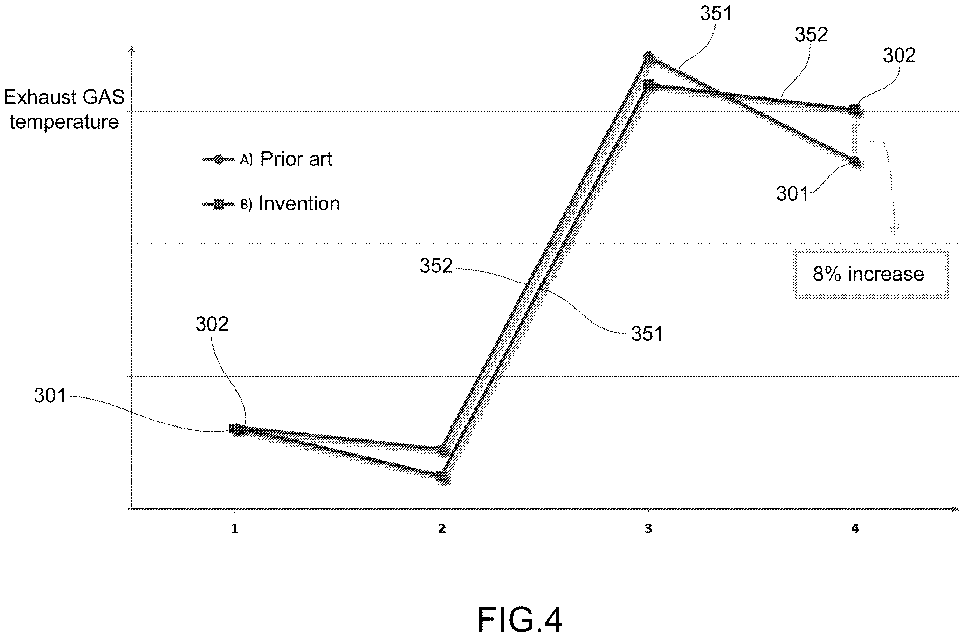

The graph in Fig. 4 shows a comparison between the temperature of the exhaust gases through the exhaust gas catalyst system 1 of the present invention and the temperature of the exhaust gases through a solution for an exhaust gas catalyst system having the same shape and dimensions but having the opposite function to that of the present invention, that is in which the gases first pass through the central chamber (in which the catalyst is housed) and then the annular chamber, before leaving towards the environment.

The graph in Fig. 4 shows how the temperature of the exhaust gases leaving the exhaust gas catalyst system of the present invention is significantly higher than in the opposite case, by approximately 100.

Therefore, the exhaust gases that reach the filtration system 600 after having fluidically passed through the exhaust gas catalyst system 1 of the present invention advantageously have a higher temperature, thereby allowing for an effective action by said filtration system 600.

As mentioned, the present invention also relates to a method for treating the exhaust gases produced by an internal combustion engine group 500 of a vehicle 900. This method comprises the step of fluidically connecting an exhaust gas catalyst system, such as that described above, to the internal combustion engine group 500 of the vehicle and to the filtration system 600 of the vehicle, and comprises the step of allowing exhaust gases produced by the internal combustion engine group 500 to flow into the first chamber 351 and then into the second central chamber 352 (in which the catalyst substrate 4 is housed) such that the catalyzing operations are carried out in the vicinity of the outlet opening 302.

Innovatively, the exhaust gas catalyst system, the vehicle comprising said exhaust gas catalyst system and the method for treating exhaust gases that is carried out by means of said exhaust gas catalyst system make it possible to achieve the object set by the invention, that is to meet the needs of the relevant technical sector, both in full and in an extremely efficient manner, by proposing an effective action of removing the fine dust particles.

Advantageously, the position of the catalyst substrate in a region that is proximal to the outlet opening of the exhaust gas catalyst system prevents the heat loss to which these gases are typically subjected. The DPF "filtration" system is advantageously achieved by high-temperature gas operating in ideal and highly efficient conditions.

Advantageously, the exhaust gas catalyst system of the present invention reduces the amount of heat dissipation that occurs during the exothermic catalytic oxidation reaction, thereby reducing the overall loss in temperature of the exhaust gases by means of the system itself and ensuring that the DPF filtration system is reached by a temperature of the exhaust gases sufficiently high to encourage full regeneration of the component over the course of its life.

Advantageously, the regeneration operations of these components and/or systems, that occur when the vehicle is stationary, are extremely effective and efficient, resulting in shorter vehicle downtime.

Advantageously, the exhaust gas catalyst system is extremely compact.

It is clear that, in order to meet contingent needs, an expert in the field could make modifications to the subject matter of the present invention described above, all of which are within the scope of protection defined by the following claims.

## Claims

1. An exhaust gas catalyst system (1) of a vehicle (900), preferably a tractor or a specialty tractor, comprising an internal combustion engine group (500) and a filtration system (600) of the DPF type, wherein said exhaust gas catalyst system (1) is suitable for performing treatment operations of the fine dusts of the exhaust gases produced by said internal combustion engine group (500), comprising:
- an inlet duct (21) fluidly connectable to the internal combustion engine group (500) to receive the exhaust gases emitted;
- an outlet duct (22) fluidly connectable to the filtration system (600) in turn connected to the environment;
- a main body (3) which extends in length along a main axis (X-X) between a head wall (30) comprising at least one inlet opening (301) fluidly connected to the inlet duct (21) and at least one outlet opening (302) fluidly connected to the outlet duct (22), and a bottom wall (32); wherein the main body (3) is hollow and internally defines a first gas treatment chamber (351), fluidly connected to the inlet opening (301), and a second chamber (352), fluidly connected to the outlet opening (302), respectively having a radially distal development with respect to said main axis (X-X) and the other having a development along the main axis (X-X), wherein the first chamber (351) and the second chamber (352) are separated from each other by a separation wall (31) which extends along the main axis (X-X);
wherein the first chamber is an annular chamber (351) having distal development with respect to said main axis (X-X) and the second chamber is a central chamber (352) having development along the main axis (X-X), wherein said central chamber (352) is surrounded in its entirety, or at least in part, by the annular chamber (351);
wherein the first chamber (351) and the second chamber (352) are fluidly connected in a region proximal to the bottom wall (32), wherein in the passage between the annular chamber (351) and the central chamber (352) the exhaust gas flows are in a radial direction from the outside to the inside and the flows of the exhaust gases in the two chambers are in counter-flow along the main axis (X-X);
wherein the exhaust gas catalyst system (1) comprises a catalyst substrate (4) through which exothermic filtration and oxidation operations are performed on the fine dust present in the exhaust gases, **characterised in that**
said catalyst substrate (4) is housed in said second chamber (352), wherein the first chamber defines a fluidic conduit for the flow of exhaust gases in which the gases flow in an undisturbed manner, and are subjected to the heating operations due to the higher temperatures produced in the second, central, chamber (352).

2. An exhaust gas catalyst system (1) according to claim 1, wherein the central chamber (352) comprises a catalysing region (352') axially proximal to the bottom wall (32) and a bottleneck (352") comprised between the catalysing region (352') and the outlet opening (302), wherein said bottleneck (352") hinders the outflow of the gases, prolonging the crossing time in the catalysing region (352').

3. An exhaust gas catalyst system (1) according to any one of the preceding claims, wherein the bottom wall (32) has a shape such as to facilitate the flow of gases from the first chamber (351) to the second chamber (352), preferably the bottom wall (32) is curved or shaped to direct the gases from the annular chamber (351) to the central chamber (352) .

4. Vehicle (900) comprising an internal combustion engine group (500), a filtration system (600) of the DPF type, and an exhaust gas catalytic system (1) according to any one of the preceding claims, wherein said exhaust gas catalyst system (1) is upstream fluidly connected to said internal combustion engine group (500) and downstream to said filtration system (600).

5. Vehicle (900) according to claim 4, wherein said vehicle is a tractor or a specialty tractor.

6. A method of treating the exhaust gases of a vehicle (900), wherein said exhaust gases are produced by an internal combustion engine group (500) of the vehicle (900), wherein said vehicle also comprises a filtration system (600) of the DPF type, wherein said method comprises the steps of:
- fluidly connecting an exhaust gas catalyst system (1), according to any one of claims 1 to 3, to the internal combustion engine group (500) and to the filtration system (600);
- allowing the exhaust gases produced by the internal combustion engine group (500) to flow into the first chamber (351) and then into the second chamber (352), so that the catalyzing operations are carried out in the vicinity of the outlet opening (302) in the direction of the filtration system (600).

## Patentansprüche

1. Abgaskatalysatorsystem (1) eines Fahrzeugs (900), vorzugsweise eines Traktors oder eines Spezialtraktors, aufweisend eine Brennkraftmaschinengruppe (500) und ein Filtersystem (600) des DPF-Typs, wobei das Abgaskatalysatorsystem (1) geeignet ist, um Behandlungsvorgänge der Feinstäube der durch die Brennkraftmaschinengruppe (500) erzeugten Abgase durchzuführen, aufweisend:
- einen Einlasskanal (21), der mit der Brennkraftmaschinengruppe (500) fluidmäßig verbindbar ist, um die ausgestoßenen Abgase aufzunehmen;
- einen Auslasskanal (22), der mit dem Filtersystem (600) fluidmäßig verbindbar ist, das wiederum mit der Umgebung verbunden ist;
- einen Hauptkörper (3), der sich in der Länge entlang einer Hauptachse (X-X) zwischen einer Kopfwand (30), die mindestens eine Einlassöffnung (301), die mit dem Einlasskanal (21) fluidmäßig verbunden ist, und mindestens eine Auslassöffnung (302), die mit dem Auslasskanal (22) fluidmäßig verbunden ist, aufweist, und einer Bodenwand (32) erstreckt;
wobei der Hauptkörper (3) hohl ist und im Inneren eine erste Gasbehandlungskammer (351), die mit der Einlassöffnung (301) fluidmäßig verbunden ist, und eine zweite Kammer (352), die mit der Auslassöffnung (302) fluidmäßig verbunden, definiert, von denen eine eine radial distale Entwicklung in Bezug auf die Hauptachse (X-X) aufweist und die andere eine Entwicklung entlang der Hauptachse (X-X) aufweist, wobei die erste Kammer (351) und die zweite Kammer (352) durch eine Trennwand (31) voneinander getrennt sind, die sich entlang der Hauptachse (X-X) erstreckt;
wobei die erste Kammer eine ringförmige Kammer (351) ist, die eine distale Entwicklung in Bezug auf die Hauptachse (X-X) aufweist, und die zweite Kammer eine mittlere Kammer (352) ist, die eine Entwicklung entlang der Hauptachse (X-X) aufweist, wobei die mittlere Kammer (352) in ihrer Gesamtheit oder zumindest teilweise von der ringförmigen Kammer (351) umgeben ist;
wobei die erste Kammer (351) und die zweite Kammer (352) in einem Bereich nahe der Bodenwand (32) fluidmäßig verbunden sind, wobei in dem Durchgang zwischen der ringförmigen Kammer (351) und der mittleren Kammer (352) die Abgasströmungen in einer radialen Richtung von außen nach innen verlaufen und die Strömungen der Abgase in den beiden Kammern in Gegenströmung entlang der Hauptachse (X-X) verlaufen;
wobei das Abgaskatalysatorsystem (1) ein Katalysatorsubstrat (4) aufweist, durch das exotherme Filtrations- und Oxidationsvorgänge mit dem in den Abgasen vorhandenen Feinstaub erfolgen,
**dadurch gekennzeichnet, dass** das Katalysatorsubstrat (4) in der zweiten Kammer (352) untergebracht ist, wobei die erste Kammer eine Fluidleitung für die Strömung von Abgasen definiert, in der die Gase ungestört strömen und aufgrund der höheren Temperaturen, die in der zweiten, mittleren Kammer (352) erzeugt werden, den Erwärmungsvorgängen unterzogen werden.

2. Abgaskatalysatorsystem (1) nach Anspruch 1, wobei die mittlere Kammer (352) einen Katalysatorbereich (352') axial nahe der Bodenwand (32) und einen Engpass (352"), der zwischen dem Katalysatorbereich (352') und der Auslassöffnung (302) gebildet ist, aufweist, wobei der Engpass (352") das Ausströmen der Gase behindert, wodurch die Durchlaufzeit in dem Katalysatorbereich (352') verlängert wird.

3. Abgaskatalysatorsystem (1) nach einem der vorhergehenden Ansprüche, wobei die Bodenwand (32) eine solche Form aufweist, dass sie die Strömung von Gasen von der ersten Kammer (351) zu der zweiten Kammer (352) erleichtert, vorzugsweise die Bodenwand (32) gekrümmt oder geformt ist, um die Gase von der ringförmigen Kammer (351) zu der mittleren Kammer (352) zu leiten.

4. Fahrzeug (900), aufweisend eine Brennkraftmaschinengruppe (500), ein Filtersystem (600) des DPF-Typs und ein Abgaskatalysatorsystem (1) nach einem der vorhergehenden Ansprüche, wobei das Abgaskatalysatorsystem (1) stromaufwärts mit der Brennkraftmaschinengruppe (500) und stromabwärts mit dem Filtersystem (600) fluidmäßig verbunden ist.

5. Fahrzeug (900) nach Anspruch 4, wobei das Fahrzeug ein Traktor oder ein Spezialtraktor ist.

6. Verfahren zur Behandlung der Abgase eines Fahrzeugs (900), wobei die Abgase von einer Brennkraftmaschinengruppe (500) des Fahrzeugs (900) erzeugt werden, wobei das Fahrzeug auch ein Filtersystem (600) vom DPF-Typ umfasst, wobei das Verfahren umfasst die Schritte:
- Fluidmäßiges Verbinden eines Abgaskatalysatorsystems (1) nach einem der Ansprüche 1 bis 3 mit der Brennkraftmaschinengruppe (500) und mit dem Filtersystem (600);
- Einströmenlassen der durch die Brennkraftmaschinengruppe (500) erzeugten Abgase in die erste Kammer (351) und dann in die zweite Kammer (352), sodass die Katalysatorvorgänge in der Nähe der Auslassöffnung (302) in der Richtung des Filtersystems (600) erfolgen.

## Revendications

1. Système catalyseur des gaz d'échappement (1) d'un véhicule (900), de préférence d'un tracteur ou d'un tracteur spécifique, comprenant un groupe moteur à combustion interne (500) et un système de filtration (600) du type DPF, dans lequel ledit système catalyseur des gaz d'échappement (1) est adapté pour réaliser des opérations de traitement de poussières fines des gaz d'échappement produits par ledit groupe moteur à combustion interne (500), comprenant :
- un conduit d'entrée (21) pouvant être relié en communication fluidique au groupe moteur à combustion interne (500) pour recevoir les gaz d'échappement émis ;
- un conduit de sortie (22) pouvant être relié en communication fluidique au système de filtration (600) relié quant à lui à l'environnement ;
- un corps principal (3), qui s'étend en longueur le long d'un axe principal (X-X) entre une paroi de tête (30) comprenant au moins une ouverture d'entrée (301) reliée en communication fluidique au conduit d'entrée (21) et au moins une ouverture de sortie (302) reliée en communication fluidique au conduit de sortie (22), et une paroi inférieure (32) ;
dans lequel le corps principal (3) est creux et définit dans son intérieur une première chambre de traitement de gaz (351), reliée en communication fluidique à l'ouverture d'entrée (301), et une deuxième chambre (352), reliée en communication fluidique à l'ouverture de sortie (302), présentant respectivement un développement distal radialement par rapport audit axe principal (X-X) et l'autre présentant un développement le long de l'axe principal (X-X), dans lequel la première chambre (351) et la deuxième chambre (352) sont séparées l'une de l'autre par une paroi de séparation (31) qui s'étend le long de l'axe principal (X-X) ;
dans lequel la première chambre est une chambre annulaire (351) présentant un développement distal par rapport audit axe principal (X-X) et la deuxième chambre est une chambre centrale (352) présentant un développement le long de l'axe principal (X-X), dans lequel ladite chambre centrale (352) est entourée dans son intégralité ou au moins en partie de la chambre annulaire (351) ;
dans lequel la première chambre (351) et la deuxième chambre (352) sont reliées en communication fluidique dans une zone à proximité de la paroi inférieure (32), dans lequel dans le passage entre la chambre annulaire (351) et la chambre centrale (352), les flux de gaz d'échappement sont dans une direction radiale depuis l'extérieur vers l'intérieur et les flux des gaz d'échappement dans les deux chambres sont à contre-courant le long de l'axe principal (X-X) ;
dans lequel le système catalyseur des gaz d'échappement (1) comprend un substrat catalyseur (4) par l'intermédiaire duquel la filtration exothermique et les opérations d'oxydation sont réalisées sur la poussière fine présente dans les gaz d'échappement, **caractérisé en ce que**
ledit substrat catalyseur (4) est logé dans ladite deuxième chambre (352), dans lequel la première chambre définit un conduit fluidique pour le flux des gaz d'échappement dans lequel les gaz s'écoulent sans perturbation et sont soumis à des opérations de chauffage en raison des températures plus élevées produites dans la deuxième chambre (352) centrale.

2. Système catalyseur des gaz d'échappement (1) selon la revendication 1, dans lequel la chambre centrale (352) comprend une région catalysatrice (352') à proximité axialement de la paroi inférieure (32) et un goulet (352") compris entre la région catalysatrice (352') et l'ouverture de sortie (302), dans lequel ledit goulet (352") entrave le flux sortant des gaz en prolongeant le temps de traversée dans la région catalysatrice (352').

3. Système catalyseur de gaz d'échappement (1) selon l'une quelconque des revendications précédentes, dans lequel la paroi inférieure (32) présente une forme de manière à faciliter l'écoulement de gaz depuis la première chambre (351) vers la deuxième chambre (352), de préférence la paroi inférieure (32) est courbée ou mise en forme de manière à diriger les gaz depuis la chambre annulaire (351) vers la chambre centrale (352).

4. Véhicule (900) comprenant un groupe moteur à combustion interne (500), un système de filtration (600) du type DPF, et un système catalyseur de gaz d'échappement (1) selon l'une quelconque des revendications précédentes, dans lequel ledit système catalyseur de gaz d'échappement (1) est relié en communication fluidique en amont audit groupe moteur à combustion interne (500) et en aval audit système de filtration (600).

5. Véhicule (900) selon la revendication 4, dans lequel ledit véhicule est un tracteur ou un tracteur spécifique.

6. Procédé de traitement des gaz d'échappement d'un véhicule (900), dans lequel lesdits gaz d'échappement sont produits par un groupe moteur à combustion interne (500) du véhicule (900), dans lequel ledit véhicule comprend également un système de filtration (600) du type DPF, dans lequel ledit procédé comprend les étapes consistant à :
- relier en communication fluidique un système catalyseur des gaz d'échappement (1) selon l'une quelconque des revendications 1 à 3 au groupe moteur à combustion interne (500) et au système de filtration (600) ;
- autoriser l'écoulement des gaz d'échappement produits par le groupe moteur à combustion interne (500) dans la première chambre (351) puis dans la deuxième chambre (352) de telle sorte que les opérations de catalyse sont mises en oeuvre dans les environs de l'ouverture de sortie (302) dans la direction du système de filtration (600).
